# EUROPÄISCHE PATENTANMELDUNG

(11) **EP 3 147 061 A1**
(43) Veröffentlichungstag der Anmeldung: **29.03.2017**
(21) Anmeldenummer: 16001330.6
(22) Anmeldetag: 13.06.2016
(51) Int. Cl.: B23F 21/16, B23C 5/04, B23C 5/22

(54) **WÄLZFRÄSZÄHNE-HALTER, WÄLZFRÄSWERKZEUG, BAUSATZ ZUM ZUSAMMENBAUEN EINES WÄLZFRÄSWERKZEUGS SOWIE VERFAHREN ZUM UMRÜSTEN UND/ODER WARTEN EINES WÄLZFRÄSWERKZEUGS**

(30) Priorität: 11.06.2015 DE 202015004072 U
(71) Anmelder: Johne + Co. Präzisionswerkzeuge GmbH, 46286 Dorsten (DE)
(72) Erfinder: JOHNE, Frank, 46286 Dorsten (DE)
(74) Vertreter: Grosse Schumacher Knauer von Hirschhausen

(57) **Zusammenfassung**

Die Erfindung betrifft einen Wälzfräszähne-Halter (1) für ein Wälzfräswerkzeug (26), insbesondere einen Stollenwälzfräser. Der Wälzfräszähne-Halter (1) umfasst einen Grundkörper (2), wobei der Grundkörper (2) im Wesentlichen zylindrisch mit einer Grundkörpersymmetrieachse (9) und mit einer ersten und einer zweiten, zur Grundkörpersymmetrieachse (9) senkrecht oder nahezu senkrecht angeordneten Stirnseite (21, 21') gebildet ist. Der Wälzfräszähne-Halter (1) ist geeignet, an dem Grundkörper (2) anordbare Zahnelemente (27) mit mehreren an einem Zahnfuß (28) angeordneten Zahnköpfen (29) zu halten. Der Wälzfräszähne-Halter (1) umfasst außerdem ein Fixierungsmittel (3), mit denen die Zahnelemente (27) an dem Grundkörper (2) lösbar befestigbar sind. Der Grundkörper (2) umfasst eine Mantelfläche (19), insbesondere eine Mantelfläche mit plan oder gewölbt geschliffenen Mantelkontaktabschnitten (18). Die Zahnelemente (27), insbesondere Zahnfüße (28) der Zahnelemente (27), sind an der Mantelfläche (19), insbesondere an Mantelkontaktabschnitten (18) der Mantelfläche (19), positionsgenau mit dem Fixiermittel (3, 3') anordbar. Die Erfindung betrifft ferner ein Wälzfräswerkzeug (26) mit einem hier beschriebenen Wälzfräszähne-Halter (1) sowie einen Bausatz zum Zusammenbauen eines Wälzfräswerkzeugs (26).

## Beschreibung

### GEBIET DER ERFINDUNG

Die Erfindung betrifft einen Wälzfräszähne-Halter für ein Wälzfräswerkzeug nach dem Oberbegriff des Anspruchs 1, nach dem Oberbegriff des Anspruchs 2, nach dem Oberbegriff des Anspruchs 6 sowie nach dem Oberbegriff des Anspruchs 8. Es kann insbesondere ein Halter für Zähne eines Stollenwälzfräsers vorgesehen sein. Mit dem Stollenwälzfräser kann eine Verzahnung in einem Werkstück durch Abwälzen des Wälzfräswerkzeugs hergestellt werden. Die Bemaßung der Verzahnung korreliert mit der Bemaßung des Wälzfräswerkzeugs, insbesondere mit (Zahn-)Komponenten des Wälzfräswerkzeugs. Ein Auswechseln der Zahnelemente, ggf. der Zahnelemente und bestimmter Wälzfräszähne-Halter-Komponenten, gestattet es dem Anwender, verschiedene Verzahnungen herzustellen.

Der hier beschriebene Wälzfräszähne-Halter für ein Wälzfräswerkzeug umfasst einen beispielsweise metallischen Grundkörper. Der Grundkörper des Wälzfräswerkzeugs ist im Wesentlichen zylindrisch gebildet, d. h. der Grundkörper hat Merkmale eines Drehteils, wie etwa einer Welle. Der Grundkörper umfasst eine Grundkörpersymmetrieachse, welche beispielsweise durch die Zylindersymmetrie vorgegeben ist. Insofern hat der Grundkörper eine Längenausdehnung entlang der Grundkörpersymmetrieachse und eine radiale Ausdehnung senkrecht zur Grundkörpersymmetrieachse. Der Grundkörper des Wälzfräswerkzeugs umfasst ferner eine erste und eine zweite, zur Grundkörpersymmetrieachse senkrecht oder nahezu senkrecht angeordnete, Stirnseite. Die Stirnseiten begrenzen den Grundkörper an dessen beiden Enden.

Das Wälzfräswerkzeug umfasst an dem Grundkörper anordbare Zahnelemente. Die Zahnelemente sind auswechselbar und können aus einem Metall gebildet sein. Bei den Zahnelementen kann es sich um Schneidzahnstollen mit mehreren Zahnköpfen handeln, wobei die Zahnstollen kammartig gebildet sein können. Die Zahnköpfe sämtlicher am Grundkörper anordbaren Kämme können eine schraubenlinienartige Anordnung der Zähne auf der Werkzeugmantelfläche ergeben. Die mehreren Zahnköpfe jedes Stollens sind an einem Zahnfuß des Zahnstollens angeordnet. Zahnköpfe und Zahnfuß eines Zahnelementes können unterschiedliche Materialeigenschaften, etwa im Hinblick auf Materialhärte, aufweisen.

Der Wälzfräszähne-Halter für das Wälzfräswerkzeug umfasst ferner ein Fixierungsmittel, mit dem zum Wälzfräsen geeignete Zahnelemente mit mehreren Zähnen an dem Grundkörper lösbar befestigbar sind. "Lösbar" meint, dass durch Lösen oder Öffnen der Komponenten des Fixierungsmittels ein oder mehrere Zahnelement(e) von dem Grundkörper entfernbar sind. "Befestigbar" meint, dass durch Festigen oder Schließen der Komponenten des Fixierungsmittels ein oder mehrere Zahnelement(e) an dem Grundkörper so anordbar sind, dass mit dem Wälzfräswerkzeug eine Wälzfräsbearbeitung eines Werkstücks mit vorgegebener Präzision und Güte möglich ist. Das Fixierungsmittel kann aus mehreren, vorzugsweise metallischen, Komponenten bestehen. "Komponenten" meint, dass das Fixierungsmittel aus mehreren Fixierungsmittelbestandteilen besteht. Die Bestandteile können aneinander angeordnet sein und/oder an dem Grundkörper.

Die Erfindung betrifft auch ein Wälzfräswerkzeug nach dem Oberbegriff des Anspruchs 16. Demnach umfasst das Wälzfräswerkzeug mehrere Zahnelemente, wobei jedes der mehreren Zahnelemente mehrere, an zumindest einem Zahnfuß angeordnete, Zahnköpfe aufweisen kann.

Die Erfindung betrifft außerdem ein Wälzfräswerkzeug nach dem Oberbegriff des Anspruchs 18 und nach dem Oberbegriff des Anspruchs 19. Das Wälzfräswerkzeug weist mehrere an einem Grundkörper eines Wälzfräszähne-Halters anordbare Zahnelemente auf. Jedes dieser Zahnelemente kann mehrere, an zumindest einem Zahnfuß angeordnete, Zahnköpfe aufweisen. Der Grundkörper des Wälzfräswerkzeugs ist im Wesentlichen zylindrisch mit einer Grundkörpersymmetrieachse und mit einer ersten und einer zweiten, zur Grundkörpersymmetrieachse senkrecht oder nahezu senkrecht angeordneten, Stirnseite gebildet.

Die Erfindung betrifft ferner einen Bausatz zum Zusammenbauen eines, insbesondere hier beschriebenen, Wälzfräswerkzeugs nach dem Oberbegriff des Anspruchs 21 sowie ein Verfahren zum Umrüsten und/oder Warten eines, insbesondere hier beschriebenen, Wälzfräswerkzeugs nach dem Oberbegriff des Anspruchs 22. Demnach ist bei dem Verfahren vorgesehen, dass Fixierungsmittel des Wälzfräswerkzeugs gelöst werden, wodurch Zahnelemente des Wälzfräswerkzeugs entnehmbar werden.

### TECHNOLOGISCHER HINTERGRUND

Ein als Stollenwälzfräser gebildetes Wälzfräswerkzeug wird in der EP 0 371 235 A2 beschrieben. Zur positionsgenauen Anordnung befestigbarer und wieder entnehmbarer Zahnelemente bedarf es gemäß der EP 0 371 235 A2 einer aufwändigen Fertigung eines Grundkörpers mit präzise geformten und präzise angeordneten respektive präzise ausgerichteten Aufnahmetaschen für Zahnelemente. Die präzise Fertigung eines solchen Grundkörpers ist zeitaufwändig und teuer.

### DARSTELLUNG DER ERFINDUNG

Der Erfindung liegt die Aufgabe zugrunde, Maßnahmen anzugeben, mit denen ein kostengünstig und effizient fertigbares und dennoch hochpräzise arbeitendes Wälzfräswerkzeug mit austauschbaren Zahnelementen ermöglicht wird.

Diese Aufgabe wir durch einen Wälzfräszähne-Halter gemäß Anspruch 1 gelöst. Demnach umfasst der Grundkörper eine Mantelfläche, insbesondere eine Mantelfläche umfassend plan oder gewölbt geschliffene Mantelkontaktabschnitte. Die Zahnelemente, insbesondere Zahnfüße der Zahnelemente, sind an der Mantelfläche, insbesondere an Mantelkontaktabschnitten der Mantelfläche, positionsgenau mit dem Fixiermittel anordbar. Die Präzision des Abstands zwischen der Grundkörpersymmetrieachse (als Bezugs- oder Referenz-Ort) und der Mantelfläche respektive Mantelkontaktabschnitten der Mantelfläche bewirkt die Präzision der Position der Zahnelemente, somit auch eine Wechselgenauigkeit bei deren Austausch, und somit eine konstante Präzision der Position der Zähne, was sich unmittelbar auf eine Verbesserung der Rundlaufeigenschaften des Werkzeugs auswirkt, auch nach einem Zahnelemente-Austausch.

Maßnahmen zum kostengünstigen und effizienten Herstellen eines Wälzfräswerkzeugs mit austauschbaren Zahnelementen ergeben sich auch durch einen Wälzfräszähne-Halter nach Anspruch 2. Demnach umfasst das Fixierungsmittel eine erste und eine zweite Mitnehmerplatte, wobei die erste Mitnehmerplatte an der ersten Stirnseite und die zweite Mitnehmerplatte an der zweiten Stirnseite lösbar anordbar ist/sind. Die Mitnehmerplatte überträgt Kräfte und Momente auf Werkzeugkomponenten, insbesondere auf die Zahnelemente, und definiert die präzise Position von Werkzeugkomponenten. Die erste und/oder die zweite Mitnehmerplatte umfasst jeweils mehrere Mitnehmernuten, in denen jeweils zumindest ein Mitnehmerabschnitt einer Wälzfräszähne-Halter-Komponente oder eines Zahnelements lösbar anordbar ist, wodurch die Zahnelemente an dem WälzfräszähneHalter positionsgenau anordbar sind. "Positionsgenau" meint hier insbesondere, dass der (radiale) Abstand zwischen der Umfangslinie der Zähne der Zahnelemente von der Grundkörpersymmetrieachse etwaige Abweichungen aufweist, die kleiner als 5 µm (5,0 · 10⁻⁶ m) sind. Es werden demnach sehr geringe Planschlagtoleranzen erreichbar. Die Positionsgenauigkeit korreliert insofern mit der Rundlaufgenauigkeit des Werkzeugs: Je kleiner die Abweichung der radialen Position der Enden der Zähne ist, desto besser ist die Rundlaufeigenschaft des Werkzeugs. Je besser die Rundlaufeigenschaft ist, desto besser ist die Präzision der Werkstückbearbeitung durch das Werkzeug.

Gemäß einer bevorzugten Ausgestaltung des Wälzfräszähne-Halters kann vorgesehen sein, dass die erste und/oder die zweite Mitnehmerplatte an dem Grundköper durch Befestigungsmittel, insbesondere durch Schrauben, befestigbar ist. Jede Mitnehmerplatte kann so auf einfache Weise an dem Grundkörper befestigt werden und bei Bedarf wieder gelöst werden. Bedarf zum Lösen einer Mitnehmerplatte ist insbesondere dann gegeben, wenn eine Werkzeug-Komponente, etwa ein oder mehrere Zahnelemente, gewartet oder ausgetauscht werden sollen. Die Wartung von Zahnelementen kann beispielsweise darin bestehen, dass sie (stellenweise) nachgeschliffen oder nachgehärtet werden. Ein Austausch von Zahnelementen kann dann erforderlich werden, wenn ein Zahnelement (verschleißbedingt) bricht, oder wenn das Anordnen einer anderen Verzahnung in dem mit dem Wälzfräswerkzeug zu bearbeitenden Werkstück vorgesehen ist.

Bevorzugt weist die Mitnehmerplatte einen kreisförmigen oder kreisringförmigen Querschnitt auf, so dass die Mitnehmerplatte eine Plattensymmetrieachse aufweist.

Die Mitnehmerplatte kann als Drehteil gefertigt werden, in das nach dem Drehen Nuten gefräst werden. Sowohl das Drehen als auch das Fräsen der Mitnehmerplatte kann mit hoher Präzision erfolgen. Das Anordnen der Mitnehmerplatte an dem Grundkörper kann ebenfalls mit hoher Präzision erfolgen. Die Grundkörpersymmetrieachse des Grundkörpers und die Plattensymmetrieachse der Mitnehmerplatte können nach dem Anordnen der Platten an dem Grundkörper kollinear verlaufen.

Jede Mitnehmernut kann senkrecht zur Symmetrieachse verlaufen. Jede Mitnehmernut kann in einem Winkel zur Radialrichtung der Mitnehmerplatte angeordnet sein. Durch den Winkel wird die Neigung derjenigen Komponente festgelegt, die in der Nut angeordnet wird.

Maßnahmen zum kostengünstigen und effizienten Herstellen eines Wälzfräswerkzeugs mit austauschbaren Zahnelementen ergeben sich ferner durch einen Wälzfräszähne-Halter nach Anspruch 6. Das Fixierungsmittel umfasst demnach mehrere an dem Grundkörper lösbar anordbare Fixierleisten, wodurch das Zahnelement an dem Wälzfräszähne-Halter positionsgenau anordbar ist. Die Zahnelemente werden durch die Fixierleisten positioniert. Das Positionieren erfolgt bevorzugt durch das Anlegen der Zahnleisten an eine erste Komponente (etwa an den Grundkörper) und an eine der Fixierleisten, die an dem Halter befestigt sind. Die exakte Position des Zahnelements ergibt sich demnach aus der exakten Position der Fixierleisten an dem Grundkörper.

Eine besondere Effizienz beim Herstellen eines gattungsgemäßen Wälzfräswerkzeugs ergibt sich, wenn sowohl Fixierleisten als auch seitlich angeordnete Mitnehmerplatten vorgesehen sind. Die Fixierleisten werden in den (Fixier-)Nuten im Grundkörper, bevorzugt unter einem Winkel zur jeweiligen Radialrichtung, angeordnet und die positionsgenaue Ausrichtung respektive stabile Fixierung der Fixierleisten erfolgt durch das Anordnen der Mitnehmerabschnitte der Fixierleisten in den Mitnehmernuten der Mitnehmerplatten. Auf diese Weise wird erreicht dass die Fixierleisten stabil und positionsgenau an dem Grundköper angeordnet sind, und dass die von den Fixierleisten fixierten Zahnelemente ebenfalls positionsgenau an dem Grundkörper angeordnet sind. Die Präzision beim Zusammenbau des Werkzeugs wird durch die Nuten in den Mitnehmerplatten beeinflusst und bestimmt. Die Nuten im Grundkörper dienen dem stabilen Sitz der Fixierungsmittel. Die Nuten in den Mitnehmerplatten lassen sich mit vergleichsweise geringem Aufwand herstellen und in den Mitnehmerplatten mit der erforderlichen Präzision fertigungstechnisch anordnen, wodurch das Wälzfräswerkzeug einfacher und kostengünstiger herstellbar wird. Eine genau bearbeitete Mantelfläche oder genau bearbeitete Mantelflächenabschnitte (Mantelkontaktabschnitte) des Grundkörpers mit einer Zentrizität von weniger als 3 µm (weniger als 3,0 · 10⁻⁶ m) garantieren eine vergleichsweise hohe Wechselgenauigkeit der (zumindest zahnelementabschnittsweise.) an dem Grundkörper anliegenden Zahnelemente.

Bevorzugt umfasst jede Fixierleiste zumindest eine Fixierleistenstirnfläche, an dem der Mitnehmerabschnitt angeordnet ist. In dem Grundkörper können parallel zu der Grundkörpersymmetrieachse verlaufende Fixiernuten angeordnet sein, in denen die Fixierleisten des Fixierungsmittels, insbesondere stabil und/oder positionsgenau, anordbar sind.

Jede Fixierleiste kann mit Befestigungsmitteln, beispielsweise an den Mitnehmerplatten, befestigbar sein. Das Befestigen der Fixierleisten kann bevorzugt mit Schrauben erfolgen, welche insbesondere in einer Richtung parallel zur Plattensymmetrieachse anordbar sind.

Maßnahmen zum kostengünstigen und effizienten Herstellen eines Wälzfräswerkzeugs ergeben sich ferner durch einen Wälzfräszähne-Halter nach Anspruch 8. Demnach umfasst das Fixierungsmittel ein lösbar anordbares Positioniermittel, mit denen die Zahnelemente an dem Wälzfräszähne-Halter in zumindest einer Vorzugsrichtung positionierbar sind. Das Positioniermittel kann bevorzugt als an dem Grundkörper angeordnete Leiste oder Keilleiste gebildet sein. Es kann alternativ vorgesehen sein, dass das Positioniermittel eine Klemmleiste umfasst, die zwischen zwei benachbarten Zahnelementen angeordnet ist. Die Klemmleiste kann an dem Grundkörper befestigbar sein, ohne im montierten Zustand mit dem Grundkörper Kontakt zu haben. Jede der Klemmleisten beaufschlagt die an ihr angeordneten Zahnelemente mit Anpresskräften, durch die die Zahnelemente an den Grundkörper und/oder aneinander gepresst werden. Es kann alternativ oder ergänzend vorgesehen sein, dass das Positioniermittel als Platte gebildet ist.

Gemäß einer Ausgestaltung kann das Positioniermittel als mit dem Grundkörper mittels Keilleisten-Schrauben verschraubte Keilleiste gebildet sein. Die Keilleiste ist geeignet, ein Zahnelement beim Anziehen der zumindest einen KeilleistenSchraube mechanisch gegen eine Komponente des Wälzfräszähne-Halters und/oder des Fixierungsmittels, etwa gegen eine Fixierleiste und/oder gegen Abschnitte der Grundkörper-Mantelfläche, zu drücken. Das Zahnelement ist so positionsgenau an dem Wälzfräszähne-Halter anordbar.

Es kann vorgesehen sein, dass in dem Grundkörper parallel zu der Grundkörpersymmetrieachse verlaufende Fixiernuten angeordnet sind, in denen die Fixierleisten des Fixierungsmittels, insbesondere stabil und/oder positionsgenau, anordbar sind. Die Fixiernuten können in den Grundkörper maschinell eingefräst werden, wobei der Fräsvorgang auch bei vergleichsweise hohen Präzisionsvorgaben wenig kostenintensiv ist. Die Fixierleiste kann beispielsweise mit Befestigungsmitteln an dem Grundkörper befestigbar sein, wobei bevorzugt Schrauben vorgesehen sein können, welche insbesondere parallel zu den Fixiernuten in geeigneten Schraubenbohrungen anordbar sind. Die Fixierleiste kann einen rechteckigen Querschnitt haben oder keilförmig gebildet sein.

Der Grundkörper umfasst bevorzugt eine Mantelfläche mit, insbesondere plan oder gewölbt geschliffenen, Mantelkontaktabschnitten. Die Zahnelemente, insbesondere die Zahnfüße, sind an den Mantelkontaktabschnitten positionsgenau anordbar.

Im Hinblick auf eine präzise und dennoch vergleichsweise kostengünstige und effiziente Herstellung des Grundkörpers kann es zweckmäßig sein, wenn zwischen zwei benachbarten Mantelkontaktabschnitten eine, insbesondere als Nut gebildete, Aufnahme für Fixierungsmittel-Komponenten gebildet ist. Die Nuten können in den im Wesentlichen zylindrisch gebildeten Grundkörper eingefräst werden. Bei den Nuten kann es sich um die Fixiernuten für die Fixierleisten handeln.

Zur Anordnung des Grundkörpers an einer Werkzeugwelle einer Werkzeugmaschine kann vorgesehen sein, dass der Grundkörper eine Zentralöffnung, insbesondere eine Zentralöffnung mit Längsnut, umfasst. Beim Anordnen des Wälzfräswerkzeugs an einer Werkzeugmaschine kann eine Passfeder in die Längsnut greifen.

Der Grundkörper und/oder das Fixierungsmittel und/oder die Zahnelemente können aus einem metallischen Werkstoff gebildet sein. Grundkörper und/oder Fixierungsmittel oder Komponenten des Fixierungsmittels und/oder Zahnelemente können durch Gießen, Fräsen und/oder Drehen hergestellt sein. Im Hinblick auf längere Standzeiten, höhere Präzision und geringeren Wartungsaufwand können die Zahnelemente, zumindest abschnittsweise, aus einem Hartmetall oder einem gehärteten Metallwerkstoff gebildet sein. Beispielsweise können die Köpfe oder Zähne der Zahnelemente härter sein als der Zahnelementfuß.

Eine besonders hohe Wechselgenauigkeit bei gleichzeitig hoher (struktureller) Stabilität im Hinblick auf einen Wechsel der Zahnelemente wird bei einer vergleichsweise hohen Zahnzahl des Werkzeugs dann erreicht, wenn die Zahnelemente mittels Keilleisten an Mantelkontaktabschnitte und an Fixierleisten der Fixierungsmittel positionsgenau gedrückt werden. Die Fixierleisten sind in Nuten der Mitnehmerplatten positionsgenau angeordnet. Die Fixierleisten sind mit den Mitnehmerplatten stirnseitig verschraubt. Die Mitnehmerplatten sind mit dem Grundkörper verschraubt. Die Keilleisten sind im Bereich der Mantelfläche des Grundkörpers mit dem Grundkörper verschraubt. Die Ring-Anordnung von Keilleisten, Fixierleisten und Zahnelementen in Verbindung mit den Mitnehmerplatten sowie das Verspannen der Komponenten durch die Befestigungsmittel führt zu einem radialen Formschluss der beteiligten Komponenten, was trotz der Vielzahnigkeit des Werkzeugs zu einer hohen strukturellen Stabilität und zu einem präzise arbeitenden Werkzeug führt.

Gemäß einer Variante des Wälzfräszähne-Halters kann ein Dämpfungsmittel vorgesehen sein. Es können auch mehrere Dämpfungsmittel vorgesehen sein. Das oder die Dämpfungsmittel sind an einer Wälzfräszähne-Halter-Komponente angeordnet, insbesondere an einer oder mehreren Fügeflächen. Bevorzugt kann das Dämpfungsmittel an einer Fixierungsmittel-Komponente angeordnet sein. Das Dämpfungsmittel kann aus einer (haftfähigen) Folie oder einer Beschichtung gebildet sein. Die Folie oder die Beschichtung wird auf einer der (Füge-)Flächen der Komponenten angeordnet. Folie oder Beschichtung wirken schwingungshemmend. Damit wird erreicht, dass sich das Schwingungsverhalten der mit dem Dämpfungsmittel ausgestatteten Komponenten und somit das Schwingungsverhalten der gesamten Vorrichtung ändert. Durch die Änderung des Schwingungsverhaltens kann das Schwingungsverhalten des Werkzeugs samt Halter an die Fertigungserfordernisse angepasst werden, wodurch die Handhabbarkeit des Werkzeug(-Halter)s verbessert wird. Sofern eine Folie vorgesehen ist, kann diese aufgeklebt werden oder durch Bonding an der Werkzeug-Komponente angeordnet werden. Sofern eine Beschichtung vorgesehen ist, kann diese durch diverse, an sich bekannte, Auftragtechniken auf den (Metall-)Oberflächen der Komponenten angeordnet werden.

Zur Verbesserung der Positionierung und/oder zum Vereinfachen der Montage respektive des Zusammenbaus kann vorgesehen sein, dass an dem Grundkörper des Wälzfräszähne-Halters und/oder an einer Fixierungsmittel-Komponente zumindest ein Justagemittel vorgesehen ist. Das Justagemittel kann stiftförmig, mit rundem oder ovalem Querschnitt, oder schwertförmig (als im Wesentlichen flaches Formteil) gebildet sein. Es kann als Fixierungshilfe dienen. Sofern das Justagemittel einen Stift respektive einen Pass-Stift oder Passbolzen umfasst, bedarf es einer komplementären Aufnahmeöffnung (Passbohrung, Ausnehmung) in einer der beteiligten Komponenten. Das Justagemittel kann an den Mitnehmerplatten und/oder an den Zahnelementen und/oder an den Fixierleisten und/oder an den Keilleisten angeordnet sein.

Maßnahmen zum kostengünstigen und effizienten Herstellen eines Wälzfräswerkzeugs ergeben sich auch durch das Wälzfräswerkzeug gemäß Anspruch 16, welches einen hier beschriebenen Wälzfräszähne-Halter umfasst. Die Zahnelemente des Wälzfräswerkzeugs können zumindest abschnittsweise aus einem Hartmetall oder einem gehärteten (Metall-)Werkstoff gebildet sein.

Maßnahmen zum kostengünstigen und effizienten Herstellen eines Wälzfräswerk-zeugs mit austauschbaren ergeben sich außerdem durch ein Wälzfräswerkzeug nach Anspruch 18. Demnach sind die Zahnlemente an dem Grundkörper positionsgenau angeordnet. Der Grundkörper umfasst eine Mantelfläche, insbesondere eine Mantelfläche mit plan oder gewölbt geschliffene Mantelkontaktabschnitten. Die Zahnelemente, insbesondere Zahnfüße der Zahnelemente, sind an der Mantelfläche, insbesondere an Mantelkontaktabschnitten der Mantelfläche, positionsgenau mit dem Fixiermittel anordbar.

Maßnahmen zum kostengünstigen und effizienten Herstellen eines Wälzfräswerkzeugs mit austauschbaren Zahnelementen ergeben sich außerdem durch ein Wälzfräswerkzeug nach Anspruch 19. Die Zahnelemente respektive die Zahnfüße der Zahnelemente umfassen Fixierungsmittel und/oder Positioniermittel, was insbesondere bei geringer Anzahl Zähne pro Werkzeug (Zahnzahl) vorteilhaft ist. Die Zahnelemente sind demnach unmittelbar an dem Grundkörper positionsgenau fixierbar. Insbesondere bei vergleichsweise kleiner Zahnanzahl kann es zweckmäßig sein, wenn das Fixierungsmittel, beispielsweise einstückig, mit den Zahnelementen verbunden ist, so dass der Wälzfräszähne-Halter mit einer geringeren Anzahl von Fixierungsmittel-Komponenten auskommt.

Bevorzugt kann jeder Zahnfuß der Zahnelemente einen Vorsprung, einen Absatz oder einen Befestigungsabschnitt aufweisen, in dem ein Befestigungsmittel, insbesondere eine in dem Grundkörper befestigbare Schraube, und/oder ein Justagemittel angeordnet ist oder anordbar ist.

Maßnahmen zum kostengünstigen und effizienten Herstellen eines Wälzfräswerkzeugs mit austauschbaren Zahnelementen ergeben sich ferner durch einen Bausatz nach Anspruch 21. Der Bausatz ist zum Zusammenbauen eines, insbesondere hier beschriebenen, Wälzfräswerkzeugs vorgesehen. Demnach ist ein hier beschriebener Wälzfräszähne-Halter vorgesehen und zumindest ein Satz Zahnelemente. Die Zahnelemente sind jeweils an dem Grundkörper des Wälzfräszähne-Halters anordbar und mit Fixierungsmitteln positionsgenau fixierbar. Bevorzugt ist ein zweiter Satz Zahnelemente vorgesehen. Der erste und der zweite Satz Zahnelemente können jeweils aus identischen Zahnelementen bestehen. So kann mit dem Bausatz der Satz Zahnelemente ausgetauscht werden, etwa wenn die Zahnelemente verschlissen sind. Es können auch einzelne Zahnelemente ausgetauscht werden, falls einzelne Zahnelemente in Folge des Gebrauchs des Wälzfräswerkzeugs verschlissen sind.

Alternativ kann vorgesehen sein dass die Zahnelemente des ersten Zahnelemente-Satzes sich hinsichtlich der Abmessungen und/oder mechanischen Eigenschaften von den Zahnelementen des zweiten Zahnelemente-Satzes unterscheiden. So kann das Wälzfräswerkzeug beispielsweise dann umgerüstet werden, wenn mit dem Wälzfräswerkzeug eine Zahnform (für eine Verzahnung) mit anderen Abmessungen gefertigt werden soll. Beispielsweise können der erste Zahnelemente-Satz für eine erste Zahnform und der zweite Zahnelemente-Satz für eine zweite, sich von der ersten Zahnform unterscheidende Zahnform vorgesehen sein. Falls erforderlich können mehrere Fixierungsmittel-Komponenten vorgesehen sein, wobei ein erster Satz Komponenten zum Fixieren des ersten Zahnelemente-Satzes vorgesehen sein kann und der zweite Satz Komponenten für den zweiten Zahnelemente-Satz.

Der Bausatz kann ferner weitere Zahnelemente-Sätze und/oder Sätze Komponenten umfassen. Es kann auch ein Bausatz vorgesehen sein, der einzelne Austausch-Zahnelemente und/oder einzelne Austausch-Komponenten umfasst.

Maßnahmen zum kostengünstigen und effizienten Herstellen eines Wälzfräswerkzeugs mit austauschbaren Zahnelementen ergeben sich schließlich durch ein Verfahren nach Anspruch 22. Das Verfahren dient dem Umrüsten und/oder Warten eines, insbesondere hier beschriebenen, Wälzfräswerkzeugs. Bei dem Verfahren werden Fixierungsmittel des Wälzfräszähne-Halters gelöst, wodurch Zahnelemente des Wälzfräswerkzeugs entnehmbar werden. Die entnommenen Zahnelemente werden bearbeitet oder ausgetauscht. Die bearbeiteten und/oder ausgetauschten Zahnelemente werden in das Wälzfräswerkzeug eingesetzt und mit den Fixierungsmitteln und/oder Positioniermitteln positionsgenau fixiert. Das Bearbeiten der Zahnelemente kann darin bestehen, dass die Zahnelemente nachgeschliffen werden oder nachgehärtet werden.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel eines Wälzfräszähne-Halters respektive eines Wälzfräswerkzeugs dargestellt ist. Auch einzelne Merkmale der Ansprüche oder der Ausführungsformen können mit anderen Merkmalen anderer Ansprüche und Ausführungsformen kombiniert werden.

### KURZBESCHREIBUNG DER FIGUREN

In der Zeichnung zeigen
- Fig. 1: einen Grundkörper eines Wälzfräszähne-Halters eines Wälzfräswerkzeugs in perspektivischer Ansicht,
- Fig. 2: den Grundkörper gemäß Fig. 1 in seitlicher Ansicht,
- Fig. 3: den Grundkörper gemäß der Figuren 1 und 2 in stirnseitiger Ansicht,
- Fig. 4: einen Wälzfräszähne-Halter in perspektivischer Ansicht,
- Fig. 5: einen Wälzfräszähne-Halter gemäß Fig. 4 in einer ersten Schnittansicht,
- Fig. 6: eine zweite Schnittansicht des Wälzfräszähne-Halters gemäß der Figuren 4 und 5,
- Fig. 7: ein Wälzfräswerkzeug in seitlicher Ansicht,
- Fig. 8: ein Wälzfräswerkzeug gemäß Fig. 7 in einer geschnittenen Ansicht,
- Fig. 9: eine Variante eines Wälzfräswerkzeugs in seitlicher Ansicht,
- Fig. 10: ein Wälzfräswerkzeug gemäß Fig. 9 in einer ersten Schnittansicht,
- Fig. 11: ein Wälzfräswerkzeug gemäß Fig. 9 in einer zweiten Schnittansicht und
- Fig. 12: eine weitere Variante eines Wälzfräswerkzeugs in geschnittenen Ansicht.

### DETAILLIERTE BESCHREIBUNG VON AUSFÜHRUNGSBEISPIELEN

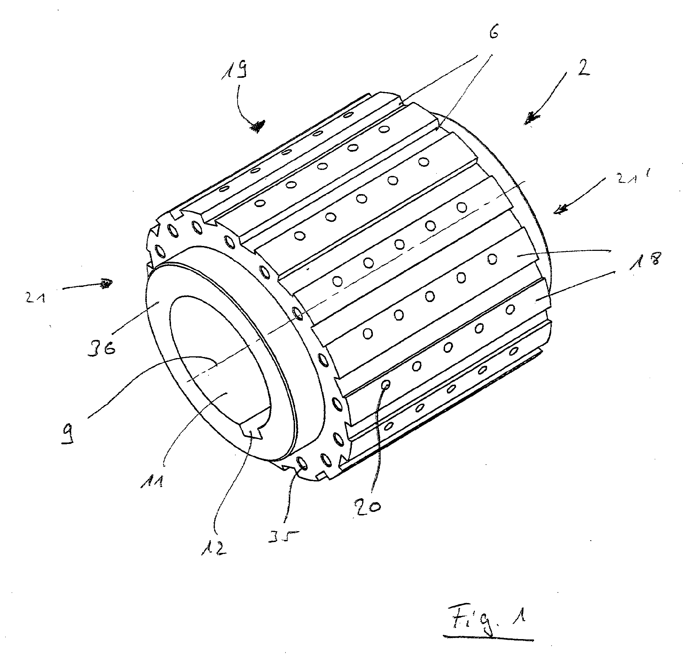

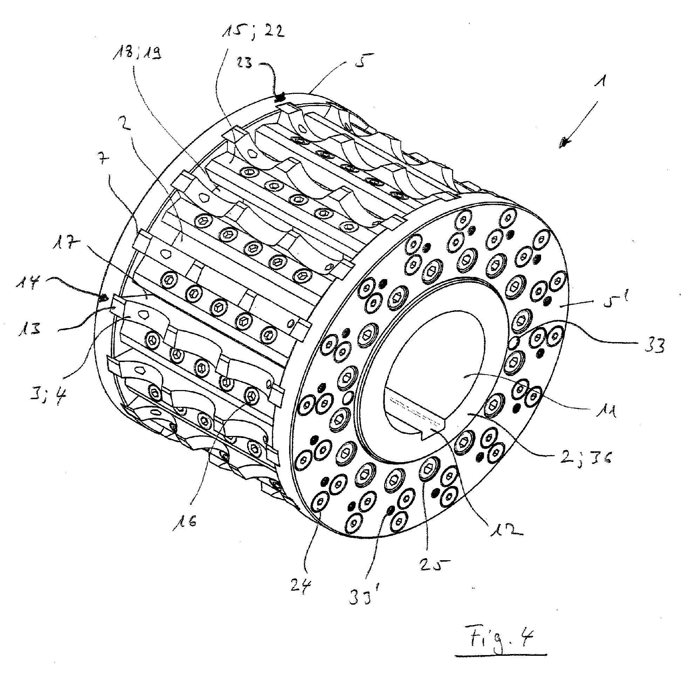

Eine perspektivische Ansicht eines Grundkörpers 2 eines Wälzfräszähne-Halters 1 kann der Fig. 1 entnommen werden. Der Grundkörper 2 hat im Wesentlichen eine hohlzylindrische Form. An den Stirnseiten 21, 21' des Grundkörpers 2 sind Gewindebohrungen 35 für Schrauben (25) zum Befestigen von seitlich anzuordnenden, beispielsweise in Fig. 4 dargestellten, Mitnehmerplatten (5, 5') in kreisförmiger Anordnung vorgesehen. Die Stirnseiten 21, 21' umfassen ferner einen Absatz 36 zur Positionierung der Mitnehmerplatten (5, 5').

Die Symmetrieachse der Zentralöffnung 11 und die Grundkörpersymmetrieachse 9 verlaufen kollinear. In der Zentralöffnung 11 ist eine Längsnut 12 angeordnet. Im Bereich der Mantelfläche (19) des Grundkörpers 2 sind Fixiernuten 6 angeordnet. Zwischen zwei benachbarten Fixiernuten 6 ist jeweils ein Mantelkontaktabschnitt 18 angeordnet. Die Flächen der gewölbten Mantelkontaktabschnitte 18 haben alle den gleichen oder nahezu den gleichen (radialen) Abstand von der Grundkörpersymmetrieachse 9, wobei eine Toleranz von weniger als 3 µm vorgesehen ist.

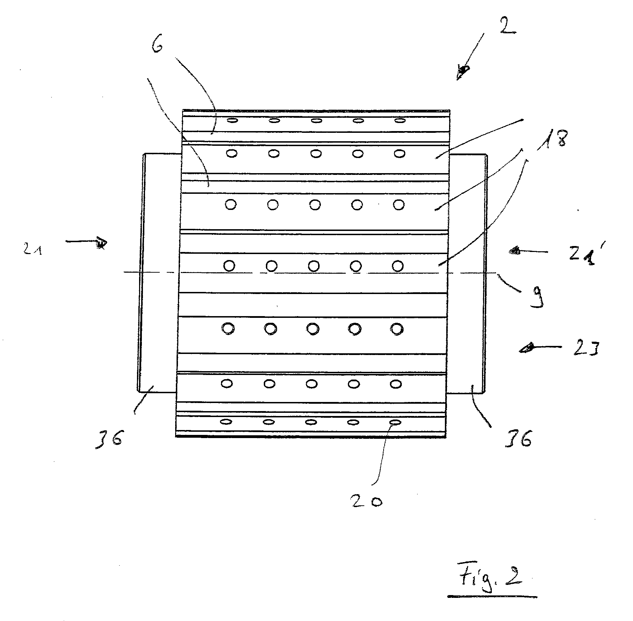

Wie auch in der seitlichen Ansicht des Grundkörpers 2, dargestellt in Fig. 2, ist zu sehen, dass im Bereich der Mantelkontaktabschnitte 18 jeweils Gewindebohrungen zum Befestigen eines (in den Figuren 1 und 2 nicht dargestellten) Fixierungsmittels (3) respektive einer Fixierungsmittel-Komponente (4) angeordnet sind.

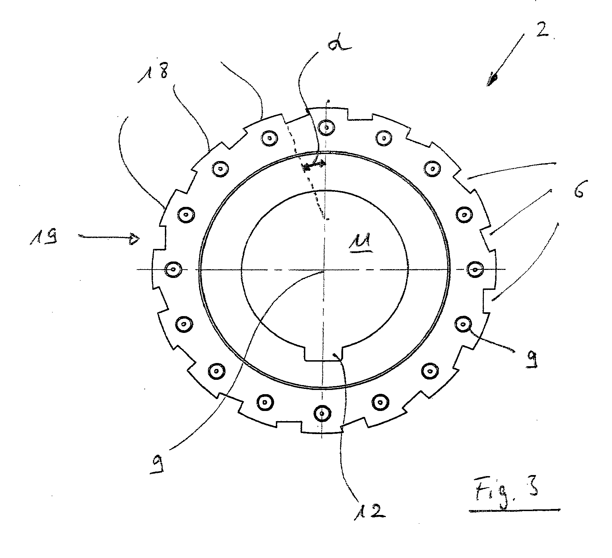

Eine seitliche Ansicht des in den Figuren 1 und 2 dargestellten Grundkörpers 2 zeigt die Fig. 3. Dort ist zu sehen, dass die Fixiernuten 6 gegenüber der Radialrichtung eine Neigung um einen Neigungswinkel α aufweisen. Die Neigung der Fixiernuten 6 führt zu geneigten Fixierungsmittel-Komponenten (Fixierleisten 4, siehe Fig. 4), wobei die Neigung so gewählt wird, dass die auf den Wälzfräszähne-Halter 1 wirkenden Kräfte und/oder Momente beim Betrieb des Wälzfräswerkzeugs (26) besser aufgenommen respektive übertragen werden. Der Fig. 3 kann ferner entnommen werden, dass die Mantelkontaktabschnitte 18 Abschnitte des Mantels 19 des Grundkörpers 2 bilden.

Eine perspektivische Ansicht eines Wälzfräszähne-Halters 1 für ein Wälzfräswerkzeugs 26 ohne Zahnelemente (27), beispielsweise gemäß einem unvollständig zusammengebauten, oben beschriebenen Bausatz kann der Fig. 4 entnommen werden. Der Wälzfräszähne-Halter 1 umfasst den Grundkörper 2 gemäß der Figuren 1 bis 3 mit der dort bereits beschriebenen Zylindersymmetrie. An dem Grundkörper 2 sind mehrere Komponenten eines mehrteiligen Fixierungsmittels 3 angeordnet. Das Fixierungsmittel 3 umfasst mehrere umfangsseitig angeordnete Fixierleisten 4 sowie an den Stirnseiten 21, 21' des Grundkörpers 2 angeordnete Mitnehmerplatten 5, 5'. Die Fixierleisten 4 sind in den Fixiernuten 6 angeordnet. Die Fixiernuten 6 sind in den Grundkörper 2 eingefräst und sind an der Fixierung der Fixierleisten 4 und dem stabilen Sitz der Fixierleiten 4 in dem Wälzfräszähne-Halter 1 beteiligt.

Die Stirnseiten 23 der Fixierleisten 4 sind in Mitnehmernuten 7 angeordnet, wobei die Mitnehmernuten 7 in den Mitnehmerplatten 5, 5' angeordnet sind. Die Mitnehmerplatten 5, 5' sind mit Schrauben 25 an dem Grundkörper 2 befestigt. Die exakte Positionierung der Fixierleisten 4 in dem Halter 1 erfolgt mittels der Mitnehmernuten 7. Die Mitnehmernuten 7 sind in die Mitnehmerplatten 5, 5' präzise eingefräst. Die Fixierleisten 4 werden mittels Fixierleisten-Schrauben 24 an einer oder beiden Mitnehmerplatten (5 und/oder 5') befestigt.

Die Fig. 4 zeigt, dass die Mitnehmerplatten 5, 5' einen kreisringförmigen Querschnitt aufweisen. Jede Mitnehmerplatte (5, 5') umfasst eine zentrale Öffnung, die auf dem Absatz 36 des Grundkörpers 2 angeordnet wird. Die durch das Zentrum der Platten 5, 5' verlaufende Plattensymmetrieachse 8 verläuft zu der Grundkörpersymmetrieachse 9 kollinear. Der Fig. 4 kann ferner entnommen werden, dass die Mitnehmerplatten 5, 5' an dem Grundkörper 2 durch mehrere Schrauben 25, insbesondere mit Schrauben 25 mit einem Innenmehrkant, verschraubt sind (beispielsweise Inbusschrauben).

Die Mitnehmernuten 7 in den Mitnehmerplatten 5, 5' und somit auch die darin angeordneten Fixierleisten 4 sind gegenüber der Radialrichtung, d. h. derjenigen Richtung, die von der Grundkörpersymmetrieachse 9 radial nach außen weist, unter einem Winkel α geneigt. Der Winkel α kann in einem Winkelbereich zwischen etwa -30° und etwa +60° liegen.

Die Fig. 4 zeigt ferner, dass die in den Mitnehmernuten 7 positionierten Mitnehmerabschnitte 13 der Fixierleisten 4 jeweils an einer Fixierleistenstirnfläche 14 der Stirnseite 23 der Fixierleisten 4 angeordnet sind. Der Fig. 4 kann ferner entnommen werden, dass der Halter 1 Keilleisten 15 umfasst. Bei den Keilleisten 15 handelt es sich um Positioniermittel 22 des Wälzfräszähne-Halters 1. Die (in Fig. 4 nicht dargestellten) Zahnelemente des Halters 1 werden durch die mittels Keilleisten-Schrauben 16 anziehbaren Keilleisten 15 mechanisch gegen die Frontseiten 17 der Fixierleisten 4 und gegen Mantelkontaktabschnitte 18 des Grundkörpers 2 gedrückt, wodurch eine genau Positionierung respektive ein positionsgenauer Sitz der Zahnelemente erzielt wird. Die Mantelkontaktabschnitte 18 sind auf dem Mantel 19 des im Wesentlichen (hohl-)zylindrischen Grundkörpers 2 angeordnet. Die Mantelkontaktabschnitte 18 befinden sich zwischen benachbarten Fixiernuten 6 im Grundkörper 2. In den Mantelkontaktabschnitten 18 respektive im Bereich der Mantelkontaktabschnitte 18 können Bohrungen 20 für Keilleisten-Schrauben 16 vorgesehen sein.

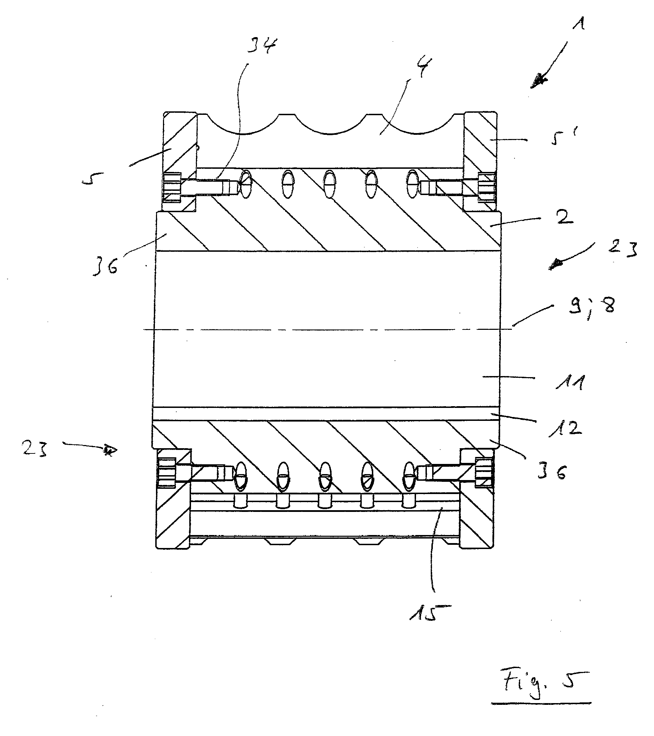

Die Fig. 5 zeigt einen Schnitt durch das Zentrum des in Fig. 4 dargestellten Halters 1, wobei die Schnittebene zu einer der Ebenen senkrecht steht, in der die Stirnseiten 21, 21' liegen. Die Gewindebohrungen 34 verlaufen zu der Grundkörpersymmetrieachse 9 parallel.

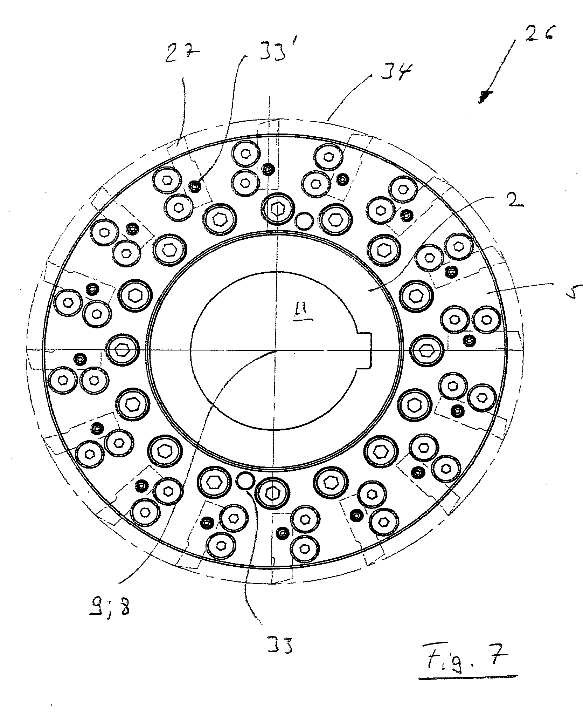

Eine seitliche Ansicht des Werkzeugs 26 respektive des zusammengebauten Werkzeugbausatzes kann der Fig. 7 entnommen werden. Der Grundkörper 2 hat im Wesentlichen die Form respektive Gestalt eines Hohlzylinders. Die Symmetrieachse 9 des Zylinderkörpers und die der Zentralöffnung 11 verlaufen kollinear. In der Zentralöffnung 11 ist eine Längsnut 12 angeordnet, die dazu geeignet ist, eine (nicht dargestellte) Passfeder zum drehfesten Anordnen des Werkzeugs 26 auf einer Maschine aufzunehmen.

Der Fig. 7 können die an den Zahnelementen 27 angeordneten Zähne des Wälzfräswerkzeugs 26 entnommen werden. Jeweils ein Zahn ist im Bereich des Zahnkopfes 29 des Zahnelements 27 angeordnet. Die radial äußeren Enden der Zähne sind entlang der Umkreislinie 34 angeordnet, deren Mittelpunkt auf der Grundkörper- und Plattensymmetrieachse (8, 9) liegt, und deren Radius größer ist als der Radius der Mitnehmerplatte 5 (5').

Der Fig. 7 können außerdem Justagemittel 33, 33' entnommen werden. Die Justagemittel 33' betreffen die Justage der Zahnelemente 27 zwischen den Mitnehmerplatten (5, 5'). Die Justagemittel 33 dienen einer Vereinfachung des Zusammenbaus des Werkzeugs 26, insbesondere der Positionierung/Anordnung der Mitnehmerplatten (5, 5') an dem Grundkörper 2. Das Justagemittel 33 ist als Verstiftung gebildet und umfasst pro Seite (21) jeweils im Grundkörper 2 und in den Mitnehmerplatten 5, 5' angeordnete Passbohrungen sowie in Passbohrungen einsetzbare Passbolzen. Die Mitnehmerplatten (5, 5') werden an dem Grundkörper 2 mit den Schrauben 25 befestigt. Die Fixierleisten-Schrauben 24 dienen dem Befestigen der Fixierleisten (nicht dargestellt in Fig. 7). Durch lösen der Fixierleisten-Schrauben 24 und der Schrauben 25 können die Zahnelemente 27 von dem Werkzeug 26 gelöst werden.

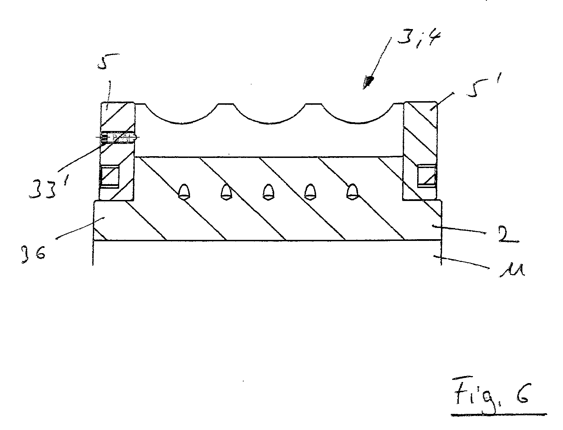

Die in Fig. 7 dargestellten (zweiten) Justagemittel 33' betreffen die Positionierung der Zahnelemente, was in der Schnittansicht gemäß Fig. 6 dargestellt ist. Fig. 6 zeigt einen Schnitt durch eine der Fixierleisten 4, die an dem Halter 1 gemäß Fig. 4 angeordnet sind.

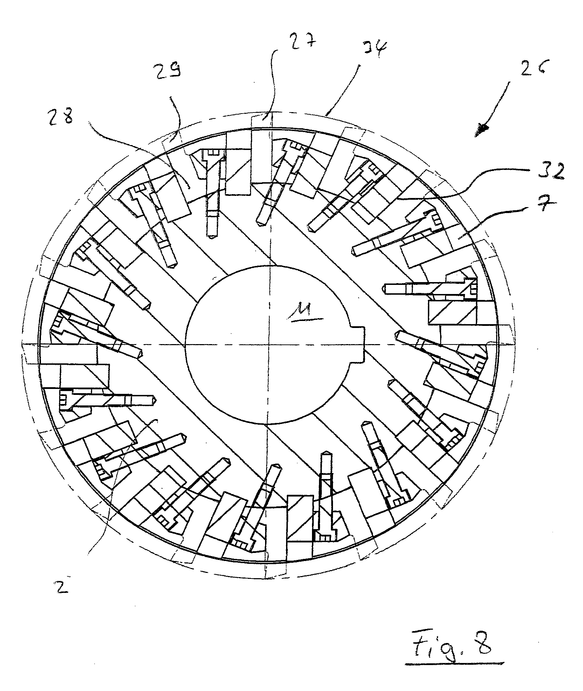

Einen Schnitt durch die Mitte des Halters 1 gemäß Fig. 7 kann der Fig. 8 entnommen werden, wobei die Schnittebene parallel zur Ebene der Stirnseiten 21, 21' und genau mittig zwischen den Stirnseiten 21 und 21' verläuft.

Eine Schnittansicht, bei der die Schnittebene parallel zu den Stirnseiten 21, 21' des Halters 1 verläuft, zeigt die Fig. 8. In Fig. 8 sind die Zahnelemente 27 zumindest schematisch dargestellt. Die Zahnelemente 27 werden durch die Keilleisten 15 gegen die Mantelkontaktabschnitte 18 des Mantels 19 des Grundkörpers 2 gedrückt, indem die Keilleisten-Schrauben 16 in dafür vorgesehenen Gewindebohrungen 20 im Grundkörper 2 angezogen werden. Durch das Anziehen der Keilleisten-Schrauben 16 werden die Zahnelemente 27 auch gegen die Fixierleisten 4 gedrückt. Es kann zweckmäßig sein, wenn an einer Frontseite 17 der Fixierleisten 4 ein als Folie gebildetes Dämpfungsmittel 32 angeordnet ist. Durch das Dämpfungsmittel 32 werden Schwingungen beim Betrieb des Werkzeugs 26 gehemmt, das Schwingungsverhalten des Werkzeugs wird dadurch beeinflusst.

Fig. 8 verdeutlicht den Sitz der Fixierleisten 4 in den Fixiernuten 6 des Grundkörpers 2, wobei die Fixierleisten 4 nicht mit dem Grundkörper 2 verschraubt sind. Es wird erreicht, dass beim Anziehen der Keilleisten-Schrauben 16 die Keilleisten 15 und die Zahnelemente 27 so zu einem Ring verspannt werden, dass Zahnelemente 27, Keilleisten 15, Fixierleisten 4 und Grundkörper 2 formschlüssig verbunden sind.

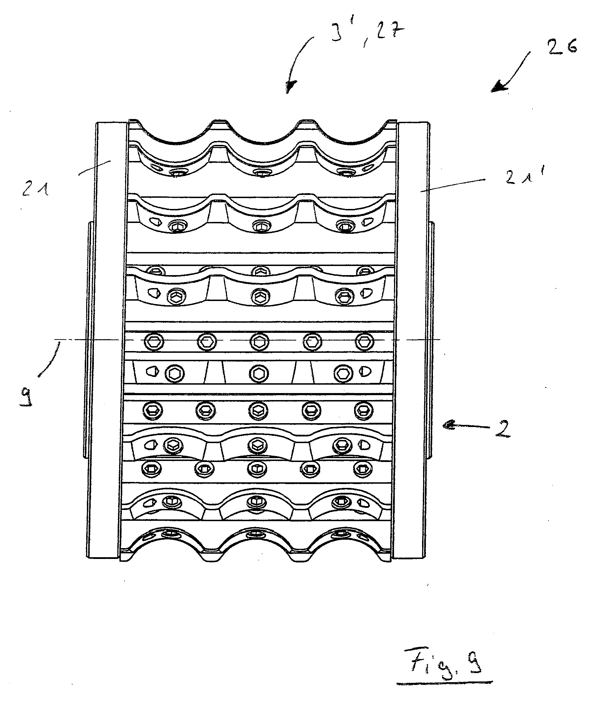

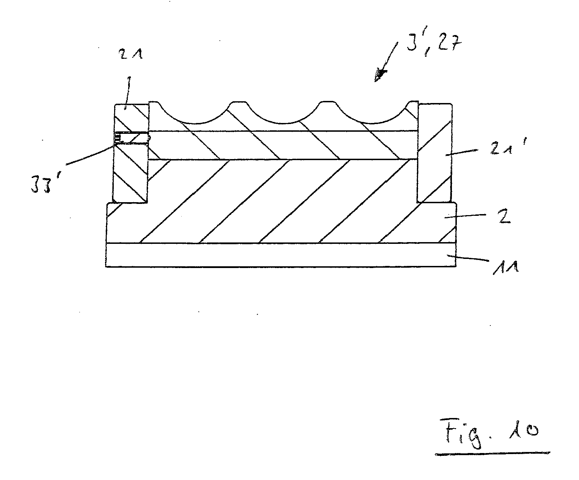

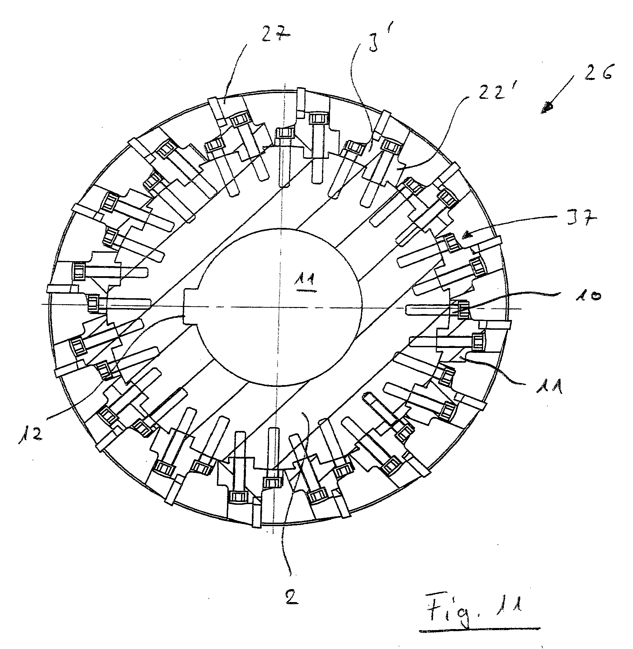

Verschiedene (schematische respektive Schnitt-)Ansichten einer ersten Variante des Wälzfräswerkzeugs 26 kann den Figuren 9 bis 11 entnommen werden. Fig. 9 zeigt eine seitliche Ansicht des Werkzeugs 26 mit mehreren Zahnelementen 27, Fig. 10 eine Schnittansicht durch ein Zahnelement 27 und Fig 11 einen Schnitt, wobei die Schnittebene gemäß Fig. 11 auf der Grundkörpersymmetrieachse 9 senkrecht steht. Bei der Variante gemäß der Figuren 9 bis 11 umfassen die Zahnelemente 27 Fixierungsmittel 3'. Die Fixierungsmittel 3' sind als Befestigungsansatz 37 gebildet, wobei der Befestigungsansatz 37 einstückig mit dem Zahnfuß 28 der Zahnelemente 27 verbunden ist. In dem Befestigungsansatz 37 sind Bohrungen für Schrauben 10 angeordnet, mit denen das Fixierungsmittel 3' an dem Grundkörper 2 befestigbar ist. Das Zahnelement 27 umfasst ferner ein als Vorsprung 30 gebildetes Positionierungsmittel 22', welche in einer Fixiernut 6 respektive im Bereich einer der Fixiernuten 6 des Grundkörpers 2 anordbar sind. Durch das Fixierungsmittel 3' und das Positioniermittel 22' des Zahnelements 27 wird das Zahnelement 27 positionsgenau an dem Wälzfräszähne-Halter 1 angeordnet. Die beim Betätigen des Wälzfräswerkzeugs 26 auf den Zahnkopf 29 wirkenden Kräfte und Momente werden hebelnd auf das Fixiermittel 3' des Zahnelements 27 übertragen.

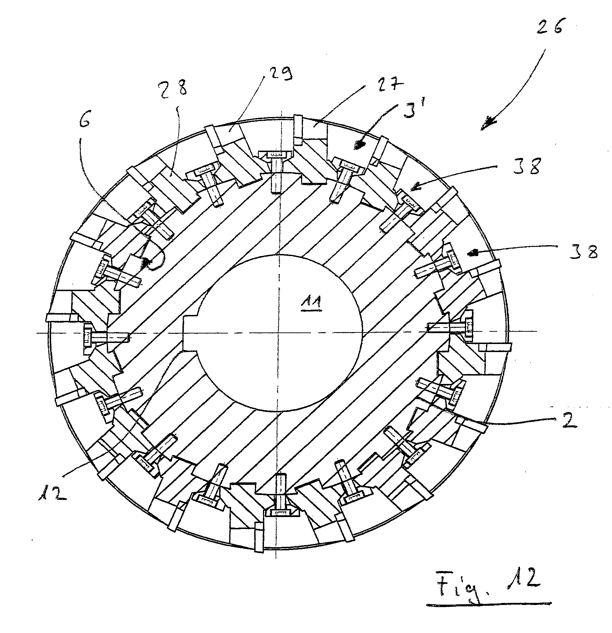

Fig. 12 zeigt eine zweite Variante eines Wälzfräswerkzeugs 26. Die Zahnelemente 27 werden an dem Grundkörper 2 mittels einer Klemmleiste 38 positionsgenau fixiert. Die Klemmleiste 38 wird mit dem Grundkörper 2 verschraubt, so dass die Klemmleiste 38 die Zahnelemente 27 an den Grundkörper 2 anpresst.

Der Grundkörper 2 wie auch die an dem Grundkörper 2 angeordneten respektive befestigten Werkzeugkomponenten (3, 4, 5, 15) sind bevorzugt aus einem harten, insbesondere metallischen, Werkstoff gebildet. Die (in den Figuren 8, 11 und 12 jeweils nur schematisch angedeuteten) Zahnelemente 27 können aus einem Werkstoff gebildet sein, der, zumindest abschnittsweise, härter als die übrigen Werkzeugkomponenten (3, 4, 5, 15) ist. Dabei kann ein Hartmetall vorgesehen sein. Beispielsweise kann kubisches β-Bornitrid (Cubic Boron Nitride, CBN) oder Polykristalliner Diamant (PKD) vorgesehen sein.

Die in den Figuren 1 bis 12 gezeigte Vorrichtung (1, 26) kann Bestandteil eines Bausatzes zum Zusammenbauen eines Wälzfräswerkzeugs 26 sein. Der Bausatz kann beispielsweise mehrere Sätze Zahnelemente 27 mit jeweils identischen oder verschiedenen Zähnen umfassen, die - je nach Anwendungsvorgaben - an dem in Grundkörper 2 des zu dem Bausatz gehörenden Halters 1 angeordnet werden können. Der Bausatz ermöglicht ein einfaches und kostengünstiges Umrüsten des Wälzfräswerkzeugs 26, etwa wenn Zahnbauteile respektive Zähne mit unterschiedlichen Abmessungen mit dem Werkzeug 1 gefertigt werden sollen.

### BEZUGSZEICHENLISTE

- 1: Wälzfräszähne-Halter
- 2: Grundkörper
- 3,3': Fixierungsmittel
- 4: Fixierleiste
- 5,5': Mitnehmerplatte
- 6: Fixiernut
- 7: Mitnehmemut
- 8: Plattensymmetrieachse
- 9: Grundkörpersymmetrieachse
- 10: Schraube
- 11: Zentralöffnung
- 12: Längsnut
- 13: Mitnehmerabschnitt
- 14: Fixierleistenstirnfläche
- 15: Keilleiste
- 16: Keilleisten-Schraube
- 17: Frontseite
- 18: Mantelkontaktabschnitt
- 19: Mantel
- 20: Bohrung
- 21, 21': Stirnseite
- 22, 22': Positioniermittel
- 23: Stirnseite
- 24: Fixierleisten-Schrauben
- 25: Schraube
- 26: Wälzfräswerkzeug
- 27: Zahnelement
- 28: Zahnfuß
- 29: Zahnkopf
- 30: Vorsprung
- 31: Befestigungsmittel
- 32: Dämpfungsmittel
- 33, 33': Justagemittel
- 34: Umkreislinie
- 35: Gewindebohrung
- 36: Absatz
- 37: Befestigungsansatz
- 38: Klemmleiste

- α: (Neigungs-)Winkel

## Patentansprüche

1. Wälzfräszähne-Halter (1) für ein Wälzfräswerkzeug (26), insbesondere für einen Stollenwälzfräser, umfassend
einen Grundkörper (2),
wobei der Grundkörper (2) im Wesentlichen zylindrisch mit einer Grundkörpersymmetrieachse (9) und mit einer ersten und einer zweiten, zur Grundkörpersymmetrieachse (9) senkrecht oder nahezu senkrecht angeordneten Stirnseite (21, 21') gebildet ist,
sowie ein Fixierungsmittel (3, 3'), mit dem zum Wälzfräsen geeignete Zahnelemente (27) mit mehreren Zähnen an dem Grundkörper (2) lösbar befestigbar sind,
**dadurch gekennzeichnet, dass** der Grundkörper (2) eine Mantelfläche (19) umfasst, insbesondere eine Mantelfläche (19) umfassend plan oder gewölbt geschliffene Mantelkontaktabschnitte (18), und dass die Zahnelemente (27), insbesondere Zahnfüße (28) der Zahnelemente (27), an der Mantelfläche (19), insbesondere an Mantelkontaktabschnitten (18) der Mantelfläche (19), positionsgenau mit dem Fixiermittel (3, 3') anordbar sind.

2. Wälzfräszähne-Halter (1) nach dem Oberbegriff des Anspruchs 1, insbesondere nach Anspruch 1, **dadurch gekennzeichnet, dass** das Fixierungsmittel (3) eine erste und eine zweite Mitnehmerplatte (5, 5') umfasst, wobei die erste Mitnehmerplatte (5) an der ersten Stirnseite (21) und die zweite Mitnehmerplatte (5') an der zweiten Stirnseite (21') lösbar anordbar ist, und dass die erste und/oder die zweite Mitnehmerplatte (5, 5') mehrere Mitnehmernuten (7) umfasst, in denen jeweils zumindest ein Mitnehmerabschnitt (13) einer Wälzfräszähne-Halter-Komponente und/oder eines Zahnelements (27) lösbar anordbar ist, wodurch die Zahnelemente (27) an dem Wälzfräszähne-Halter (1) positionsgenau anordbar sind.

3. Wälzfräszähne-Halter (1) nach Anspruch 2, **dadurch gekennzeichnet, dass** die erste und/oder die zweite Mitnehmerplatte (5, 5') an dem Grundkörper (2) durch Befestigungsmittel, insbesondere durch Schrauben (25), befestigbar ist.

4. Wälzfräszähne-Halter (1) nach Anspruch 2 oder 3, **dadurch gekennzeichnet, dass** die Mitnehmerplatte (5, 5') einen kreisförmigen oder kreisringförmigen Querschnitt aufweist, so dass die Mitnehmerplatte (5, 5') eine Plattensymmetrieachse (8) aufweist, und dass die Grundkörpersymmetrieachse (9) des Grundkörpers (2) und die Plattensymmetrieachse (8) der Mitnehmerplatte (5, 5') kollinear verlaufen.

5. Wälzfräszähne-Halter (1) nach einem der Ansprüche 2 bis 4, **dadurch gekennzeichnet, dass** jede Mitnehmemut (7) in einem Winkel (α) zur Radialrichtung der Mitnehmerplatte (5, 5') angeordnet ist.

6. Wälzfräszähne-Halter (1) nach dem Oberbegriff des Anspruchs 1, insbesondere nach einem der Ansprüche 1 bis 5, **dadurch gekennzeichnet, dass** das Fixierungsmittel (3) mehrere an dem Grundkörper (2) lösbar anordbare Fixierleisten (4) umfasst, wodurch jedes Zahnelement (26) an dem Wälzfräszähne-Halter (1) positionsgenau anordbar ist.

7. Wälzfräszähne-Halter (1) nach Anspruch 6, **dadurch gekennzeichnet, dass** jede Fixierleiste (4) zumindest eine Fixierleistenstirnfläche (14) umfasst, an dem ein Mitnehmerabschnitt (15) angeordnet ist.

8. Wälzfräszähne-Halter (1) nach dem Oberbegriff des Anspruchs 1, insbesondere nach einem der Ansprüche 1 bis 7, **dadurch gekennzeichnet, dass** das Fixierungsmittel (3) ein lösbar anordbares Positioniermittel (22) umfasst, mit denen die Zahnelemente (27) an dem Wälzfräszähne-Halter (1) in zumindest einer Vorzugsrichtung positionierbar sind, wobei das Positioniermittel (22) bevorzugt als an dem Grundkörper (2) angeordnete Keilleisten (15) oder als zwischen den Zahnelementen (27) angeordnete Klemmleisten (38) gebildet ist, insbesondere als mit dem Grundkörper (2) mittels Keilleisten-Schrauben (16) verschraubte Keilleisten (15), wobei jede Keilleiste (15) geeignet ist, ein Zahnelement (27) beim Anziehen der Keilleisten-Schrauben (16) mechanisch gegen eine Komponente des Wälzfräszähne-Halters (1) und/oder des Fixierungsmittels (3) zu drücken, wodurch das Zahnelement (27) positionsgenau an dem Wälzfräszähne-Halter (1) anordbar ist.

9. Wälzfräszähne-Halter (1) nach einem der Ansprüche 6 bis 8, **dadurch gekennzeichnet, dass** in dem Grundkörper (2) parallel zu der Grundkörpersymmetrieachse (9) verlaufende Fixiernuten (6) angeordnet sind, in denen Fixierleisten (4) des Fixierungsmittels (3), insbesondere stabil und/oder positionsgenau, anordbar sind.

10. Wälzfräszähne-Halter (1) nach einem der Ansprüche 6 bis 9, **dadurch gekennzeichnet, dass** jede Fixierleiste (4) mit Befestigungsmitteln befestigbar ist, bevorzugt mit Schrauben (24).

11. Wälzfräszähne-Halter (1) nach einem der Anspruche 1 bis 10, **dadurch gekennzeichnet, dass** zwischen zwei benachbarten Mantelkontaktabschnitten (18) eine, insbesondere als Nut gebildete, Aufnahme für Fixierungsmittel-Komponenten und/oder Positioniermittel (22) gebildet ist.

12. Wälzfräszähne-Halter (1) nach einem der Ansprüche 1 bis 11, **dadurch gekennzeichnet, dass** der Grundkörper (2) eine Zentralöffnung (11), insbesondere eine Zentralöffnung (11) mit Längsnut (12), umfasst.

13. Wälzfräszähne-Halter (1) nach einem der Ansprüche 1 bis 12, **dadurch gekennzeichnet, dass** der Grundkörper (2) und/oder das Fixierungsmittel (3, 3') aus einem metallischen Werkstoff gebildet sind.

14. Wälzfräszähne-Halter (1) nach einem der Ansprüche 1 bis 13, **gekennzeichnet durch** ein Dämpfungsmittel (32), welches an einer Wälzfräszähne-Halter-Komponente (2, 3, 4, 5, 5', 15, 17, 21, 21', 22), insbesondere an einer Fixierungsmittel-Komponente (4, 5, 5', 15, 38), angeordnet ist, und welches aus einer haftfähigen Folie oder einer Beschichtung gebildet ist.

15. Wälzfräszähne-Halter (1) nach einem der Ansprüche 1 bis 14, **dadurch gekennzeichnet, dass** an dem Grundkörper (2) und/oder an einer Fixierungsmittel-Komponente (3, 4, 5, 5', 15, 22, 22') ein Justagemittel (33, 33') vorgesehen ist.

16. Wälzfräswerkzeug (26) mit mehreren austauschbaren Zahnelementen (27), wobei jedes Zahnelement (27) bevorzugt mehrere an zumindest einem Zahnfuß (28) angeordnete Zahnköpfe (29) aufweist, **gekennzeichnet durch** ein die Zahnelemente (27) haltenden Wälzfräszähne-Halter (1) nach einem der Ansprüche 1 bis 15.

17. Wälzfräswerkzeug (26) nach Anspruch 16, **dadurch gekennzeichnet, dass** die Zahnelemente (27) zumindest abschnittsweise aus einem Hartmetall oder einem gehärteten Metallwerkstoff gebildet sind.

18. Wälzfräswerkzeug (26) mit mehreren an einem Grundkörper (2) eines Wälzfräszähne-Halters (1) anordbaren und austauschbaren Zahnelementen (27),
wobei jedes Zahnelement (27) bevorzugt mehrere an zumindest einem Zahnfuß (28) angeordnete Zahnköpfe (29) aufweist, und
wobei der Grundkörper (2) im Wesentlichen zylindrisch mit einer Grundkörpersymmetrieachse (9) und mit einer ersten und einer zweiten, zur Grundkörpersymmetrieachse (9) senkrecht oder nahezu senkrecht angeordneten Stirnseite (21, 21') gebildet ist,
**dadurch gekennzeichnet, dass** die Zahnlemente (27) an dem Grundkörper (2) positionsgenau angeordnet sind, wobei Grundkörper (2) eine Mantelfläche (19) umfasst, insbesondere eine Mantelfläche (19) umfassend plan oder gewölbt geschliffene Mantelkontaktabschnitte (18), und dass die Zahnelemente (27), insbesondere Zahnfüße (28) der Zahnelemente (27), an der Mantelfläche (19), insbesondere an Mantelkontaktabschnitten (18) der Mantelfläche (19), positionsgenau mit dem Fixiermittel (3) anordbar sind.

19. Wälzfräswerkzeug (26) nach dem Oberbegriff des Anspruchs 18, insbesondere nach Anspruch 18, **dadurch gekennzeichnet, dass** die Zahnelemente (27), insbesondere die Zahnfüße (28) der Zahnelemente (27), Fixierungsmittel (3') und/oder Positioniermittel (22') umfassen, wodurch die Zahnelemente (27) an dem Grundkörper (2) positionsgenau fixierbar sind.

20. Wälzfräswerkzeug (26) nach einem der Ansprüche 16 bis 19, **dadurch gekennzeichnet, dass** jeder Zahnfuß (28) der Zahnelemente (27) einen Absatz (36) und/oder einen Vorsprung (30) aufweist, in dem ein Befestigungsmittel (31), insbesondere eine in dem Grundkörper (2) befestigbare Schraube (10), und/oder ein Justagemittel (33) angeordnet ist oder anordbar ist.

21. Bausatz zum Zusammenbauen eines Wälzfräswerkzeugs (26), insbesondere eines Wälzfräswerkzeugs (26) nach einem der Ansprüche 16 bis 20, **gekennzeichnet durch** einen Wälzfräszähne-Halter (1) nach einem der Ansprüche 1 bis 15 und **durch** zumindest einen Satz Zahnelemente (27), welche an einem Grundkörper (2) des Wälzfräszähne-Halters (1) anordbar und mit Fixierungsmitteln (3, 3') positionsgenau fixierbar ist.

22. Verfahren zum Umrüsten und/oder Warten eines Wälzfräswerkzeugs, insbesondere eines Wälzfräswerkzeugs nach einem der Ansprüche 16 bis 20, bei dem Fixierungsmittel eines Wälzfräszähne-Halters, insbesondere eines Wälzfräszähne-Halters nach einem der Ansprüche 1 bis 15, gelöst werden, wodurch Zahnelemente des Wälzfräswerkzeugs entnehmbar werden, **dadurch gekennzeichnet, dass** die entnommenen Zahnelemente bearbeitet oder ausgetauscht werden, und dass die bearbeiteten und/oder ausgetauschten Zahnelemente in das Wälzfräswerkzeug eingesetzt und mit den Fixierungsmitteln und/oder Positioniermitteln positionsgenau fixiert werden.
